# FASCICULE DE BREVET EUROPEEN

(11) **EP 3 674 530 B1**
(45) Date de publication et mention de la délivrance du brevet: **22.02.2023**
(21) Numéro de dépôt: 19213401.3
(22) Date de dépôt: 04.12.2019
(51) Int. Cl.: F02C 7/045, F02K 1/82, B32B 37/14, B29D 24/00, B32B 3/12, G10K 11/16, B29D 99/00, B32B 3/08, B32B 3/26, B32B 7/12, G10K 11/172, B64D 33/02, B29L 31/00

(54) **PROCÉDÉ DE FABRICATION D'UNE STRUCTURE D'ABSORPTION ACOUSTIQUE COMPRENANT UN PANNEAU ALVÉOLAIRE INTÉGRANT DES ÉLÉMENTS ACOUSTIQUES ET STRUCTURE D' ABSORPTION ACOUSTIQUE OBTENUE À PARTIR DUDIT PROCÉDÉ**
VERFAHREN ZUR HERSTELLUNG EINER SCHALLABSORBIERENDEN STRUKTUR MIT EINER WABENPLATTE, DIE AKUSTISCHE ELEMENTE ENTHÄLT, UND DURCH DIESES VERFAHREN ERHALTENE SCHALLABSORBIERENDE STRUKTUR
METHOD OF MANUFACTURING A SOUND ABSORPTION STRUCTURE COMPRISING A HOLLOW-WALLED PANEL INCORPORATING ACOUSTIC ELEMENTS, AND SOUND ABSORPTION STRUCTURE OBTAINED BY SAID METHOD

(30) Priorité: 24.12.2018 FR 1874135
(43) Date de publication de la demande: 01.07.2020
(73) Titulaire: Airbus Operations SAS, 31060 Toulouse (FR)
(72) Inventeur: BROSSARD, Denis, 44860 Saint Aignan de Grand Lieu (FR); CALIMAN, Laurent, 31000 Toulouse (FR); RAVISE, Florian, 44800 Saint-Herblain (FR); LE CLAINCHE, Stéphane, 44640 Cheix en Retz (FR)
(74) Mandataire: Fantin, Laurent

(56) Documents cités:
- EP-A1- 3 489 487
- WO-A1-2014/200499
- US-A- 3 734 234
- US-A1- 2013 186 707
- US-A1- 2015 041 247

## Description

La présente demande se rapporte à un procédé de fabrication d'une structure d'absorption acoustique comprenant un panneau alvéolaire intégrant des éléments acoustiques ainsi qu'à une structure d'absorption acoustique obtenue à partir dudit procédé.

Selon un mode de réalisation de l'art antérieur, un ensemble propulsif comprend une nacelle ainsi qu'une turbomachine double flux, positionnée à l'intérieur de la nacelle. Certaines surfaces de la nacelle et de la turbomachine comprennent des structures d'absorption acoustique pour atténuer les nuisances sonores. Selon un mode de réalisation, une structure d'absorption acoustique comprend une couche poreuse, une couche alvéolaire en nid d'abeilles et une couche réflectrice.

Une turbomachine à haut taux de dilution dit UHBR (pour Ultra Hight Bypass Ratio en anglais) présente une soufflante tournant à des fréquences plus basses que certaines turbomachines actuellement sur le marché si bien que les structures d'absorption acoustique doivent être configurées pour atténuer des ondes sonores à basses fréquences. Pour atténuer de telles ondes sonores, la couche alvéolaire en nid d'abeilles doit avoir une hauteur importante, ce qui est pénalisant en termes de masse, d'encombrement et de fabrication.

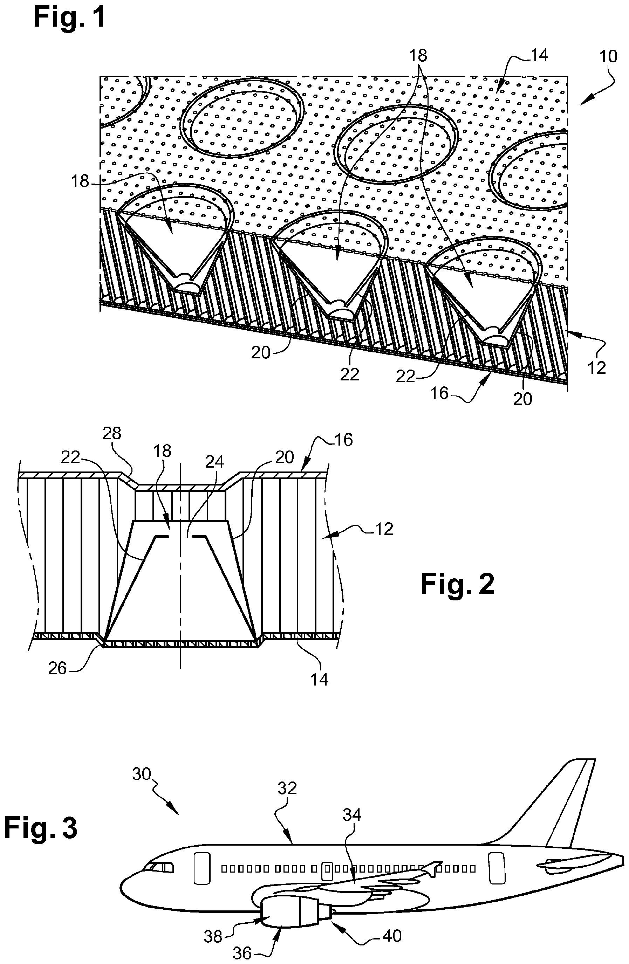

Selon un mode de réalisation visible sur la figure 1, une structure d'absorption acoustique 10 permettant d'absorber des ondes sonores à basses fréquences comprend un panneau alvéolaire 12 en nid d'abeilles, une couche poreuse 14 plaquée contre une première face du panneau alvéolaire 12, une couche réflectrice 16 plaquée contre une deuxième face du panneau alvéolaire 12 et une pluralité d'éléments acoustiques 18 intégrés dans le panneau alvéolaire 12. Chaque élément acoustique 18 comprend une première enceinte 20 (également appelée capsule) tronconique, présentant une grande base fermée par la couche poreuse 14 de sorte à délimiter une première cavité, ainsi qu'une deuxième enceinte 22 (également appelée cône), conique ou tronconique, positionnée dans la première cavité et espacée de la première enceinte 20. Chaque deuxième enceinte 22 comprend au moins un orifice acoustique 24 permettant de faire communiquer l'intérieur de la deuxième enceinte 22 avec l'espace situé entre les première et deuxième enceintes 20, 22. Le panneau alvéolaire 12 comprend, pour chaque élément acoustique 18, un logement de forme tronconique, borgne, configuré pour loger l'élément acoustique 18, distant de la deuxième face du panneau alvéolaire 12 et débouchant seulement au niveau de la première face du panneau alvéolaire 12. Le document US2015041247 décrit une structure d'absorption acoustique relativement proche avec des logements traversants.

Selon un mode opératoire connu, le procédé de fabrication d'une telle structure d'absorption acoustique comprend :
- une première étape de mise en forme du panneau alvéolaire 12, de dépose d'au moins une couche d'ancrage contre la deuxième face du panneau alvéolaire 12 et d'usinage des logements,
- une deuxième étape d'encollage des éléments acoustiques 18 et de mise en place des éléments acoustiques 18 dans leur logement (la première face du panneau alvéolaire 12 étant orientée vers le haut),
- une troisième étape de retournement du panneau alvéolaire 12 de manière à le plaquer contre la couche poreuse 14 positionnée sur un outillage,
- une quatrième étape de dépose de la couche réflectrice 16 contre la couche d'ancrage, et
- une dernière étape de cuisson ou polymérisation, la première face du panneau alvéolaire 12 étant orientée vers le bas.

Ce mode opératoire n'est pas pleinement satisfaisant car les éléments acoustiques 18 peuvent sortir de leur logement lors de la troisième étape de retournement. Lors de l'étape de cuisson ou polymérisation, les éléments acoustiques 18, initialement plaqués dans le fond de leur logement, se décalent vers le bas jusqu'à venir en contact contre la couche poreuse 14. Ce décalage vers le bas des éléments acoustiques 18 provoque un marquage 26 de la couche poreuse 14 et un affaissement 28 de la couche réflectrice 16, comme illustré sur la figure 2.

La présente invention vise à remédier à tout ou partie des inconvénients de l'art antérieur. A cet effet, l'invention a pour objet un procédé de fabrication d'une structure d'absorption acoustique comprenant un panneau alvéolaire, une couche poreuse positionnée au niveau d'une première face du panneau alvéolaire, une couche réflectrice positionnée au niveau d'une deuxième face du panneau alvéolaire et une pluralité d'éléments acoustiques positionnés dans le panneau alvéolaire, chaque élément acoustique comprenant une première enceinte qui présente une première embouchure fermée par la couche poreuse de manière à former une première cavité, une deuxième enceinte dans laquelle est positionnée la première enceinte, fermée de manière à former une deuxième cavité et au moins un orifice acoustique traversant la première enceinte.

Selon l'invention, le procédé de fabrication comprend les étapes :
- de réalisation, pour chaque élément acoustique, d'un logement dans le panneau alvéolaire qui débouche au niveau des première et deuxième faces du panneau alvéolaire,
- d'insertion des éléments acoustiques dans leur logement,
- de dépose d'une couche d'ancrage sur la deuxième face du panneau alvéolaire,
- de cuisson ou polymérisation à une première pression permettant de relier chaque élément acoustique au panneau alvéolaire et/ou à la couche d'ancrage,
- de mise en place de la couche poreuse et de la couche réflectrice, et
- de cuisson ou polymérisation à une deuxième pression permettant de relier la couche poreuse et la couche réflectrice au panneau alvéolaire.

Le fait de prévoir une première étape de cuisson ou polymérisation pour relier les éléments acoustiques et le panneau alvéolaire et une deuxième étape de cuisson ou polymérisation pour relier la couche poreuse et la couche réflectrice au panneau alvéolaire permet d'obtenir une excellente cohésion entre la couche poreuse, le panneau alvéolaire et la couche réflectrice tout en limitant les phénomènes de « telegraphing » lors de la première étape de cuisson ou polymérisation.

Selon une autre caractéristique, la première pression est inférieure à la deuxième pression. Selon une autre caractéristique, la première pression est comprise entre 0,5 et 1 bar et/ou la deuxième pression est de l'ordre de 2 bars.

Selon une autre caractéristique, chaque élément acoustique présente une paroi latérale cylindrique ; et la première face du panneau alvéolaire est plaquée contre une surface d'un outillage lors de l'étape d'insertion des éléments acoustiques jusqu'à la première étape de cuisson ou polymérisation, les éléments acoustiques étant introduits dans leur logement depuis la deuxième face du panneau alvéolaire.

Selon une autre caractéristique, pour chaque élément acoustique, un système de liaison, activable lors de la première étape de cuisson ou polymérisation, est positionné entre l'élément acoustique et le panneau alvéolaire et/ou la couche d'ancrage.

Selon une autre caractéristique, le système de liaison comprend au moins un film de colle intumescent apposé sur au moins une partie d'une face latérale de chaque élément acoustique préalablement à l'insertion des éléments acoustiques dans leur logement.

Selon une autre caractéristique, la couche poreuse est préalablement polymérisée avant d'être solidarisée au panneau alvéolaire et un film de colle est intercalé entre la couche poreuse et le panneau alvéolaire avant la deuxième étape de cuisson ou polymérisation. Selon une autre caractéristique, le film de colle est configuré pour ne pas recouvrir les éléments acoustiques.

L'invention a également pour objet une structure d'absorption acoustique obtenue à partir du procédé de fabrication selon l'une des caractéristiques précédentes, ladite structure d'absorption acoustique comprenant un panneau alvéolaire, une couche poreuse positionnée au niveau d'une première face du panneau alvéolaire, une couche réflectrice positionnée au niveau d'une deuxième face du panneau alvéolaire et une pluralité d'éléments acoustiques positionnés dans le panneau alvéolaire, chaque élément acoustique comprenant une première enceinte qui présente une première embouchure fermée par la couche poreuse de manière à former une première cavité, une deuxième enceinte dans laquelle est positionnée la première enceinte, fermée de manière à former une deuxième cavité, et au moins un orifice acoustique traversant la première enceinte.

Selon l'invention, le panneau alvéolaire comprend, pour chaque élément acoustique, un logement qui débouche au niveau des première et deuxième faces du panneau alvéolaire ; et la structure d'absorption acoustique comprend une couche d'ancrage intercalée entre la deuxième face du panneau alvéolaire et la couche réflectrice.

Selon une autre caractéristique, les éléments acoustiques présentent une hauteur sensiblement égale à l'épaisseur du panneau alvéolaire.

Selon une autre caractéristique, la structure d'absorption acoustique comprend un film de colle intumescent intercalé entre d'une part l'élément acoustique et d'autre part le panneau alvéolaire et/ou la couche d'ancrage.

L'invention a également pour objet un ensemble propulsif d'aéronef comprenant au moins une structure d'absorption acoustique selon l'une des caractéristiques précédentes.

D'autres caractéristiques et avantages ressortiront de la description qui va suivre de l'invention, description donnée à titre d'exemple uniquement, en regard des dessins annexés sur lesquels :
- La figure 1 est une vue en perspective d'une structure d'absorption acoustique qui illustre un mode de réalisation de l'art antérieur,
- La figure 2 est une coupe d'une partie de la structure d'absorption acoustique visible sur la figure 1,
- La figure 3 est une vue latérale d'un aéronef,
- La figure 4 est une vue en perspective d'un conduit d'éjection primaire comprenant une structure d'absorption acoustique qui illustre une application de l'invention,
- La figure 5 est une coupe d'un panneau alvéolaire qui illustre une première étape d'un procédé de fabrication d'une structure d'absorption acoustique d'un mode de réalisation de l'invention,
- La figure 6 est une coupe d'un panneau alvéolaire qui illustre une deuxième étape d'un procédé de fabrication d'une structure d'absorption acoustique qui illustre un mode de réalisation de l'invention,
- La figure 7 est une coupe d'un élément acoustique qui illustre un mode de réalisation de l'invention,
- La figure 8 est une coupe d'un panneau alvéolaire qui illustre une troisième étape d'un procédé de fabrication d'une structure d'absorption acoustique d'un mode de réalisation de l'invention,
- La figure 9 est une coupe d'un panneau alvéolaire qui illustre une quatrième étape d'un procédé de fabrication d'une structure d'absorption acoustique d'un mode de réalisation de l'invention,
- La figure 10 est une coupe d'un panneau alvéolaire qui illustre une cinquième étape d'un procédé de fabrication d'une structure d'absorption acoustique d'un mode de réalisation de l'invention,
- La figure 11 est une coupe d'un panneau alvéolaire qui illustre une sixième étape d'un procédé de fabrication d'une structure d'absorption acoustique d'un mode de réalisation de l'invention, et
- La figure 12 est une vue en perspective d'une structure d'absorption acoustique qui illustre un mode de réalisation de l'invention.

Sur la figure 3, on a représenté un aéronef 30 qui présente un fuselage 32, deux ailes 34, disposées de part et d'autre du fuselage 32, et des ensembles propulsifs 36 fixés sous les ailes 34. Chaque ensemble propulsif 36 comprend une nacelle 38 et une turbomachine 40 positionnée à l'intérieur de la nacelle 38.

Selon un mode de réalisation visible sur la figure 2, l'ensemble propulsif 36 comprend un conduit d'éjection secondaire 42, canalisant un flux d'air secondaire, qui est délimité par une paroi intérieure 44 (également appelée IFS pour inner fixed structure en anglais) et par une paroi extérieure 46 (également appelée OFS pour outer fixed structure en anglais).

Selon une configuration, la paroi intérieure 44 ou la paroi extérieure 46 comprend une structure d'absorption acoustique 48 (également appelée panneau acoustique).

Bien que décrite appliquée à un conduit d'éjection secondaire 42, l'invention n'est pas limitée à cette application. Ainsi, la structure d'absorption acoustique 48 peut être positionnée au niveau de toute peau qui présente une surface extérieure en contact avec un milieu dans lequel se propagent, en fonctionnement, des ondes sonores, comme par exemple une lèvre et un conduit d'une entrée d'air d'une nacelle d'aéronef, un carter de soufflante d'une nacelle d'aéronef ou tout autre surface de l'ensemble propulsif 36. Quelle que soit la configuration, l'ensemble propulsif 36 comprend au moins une structure d'absorption acoustique 30.

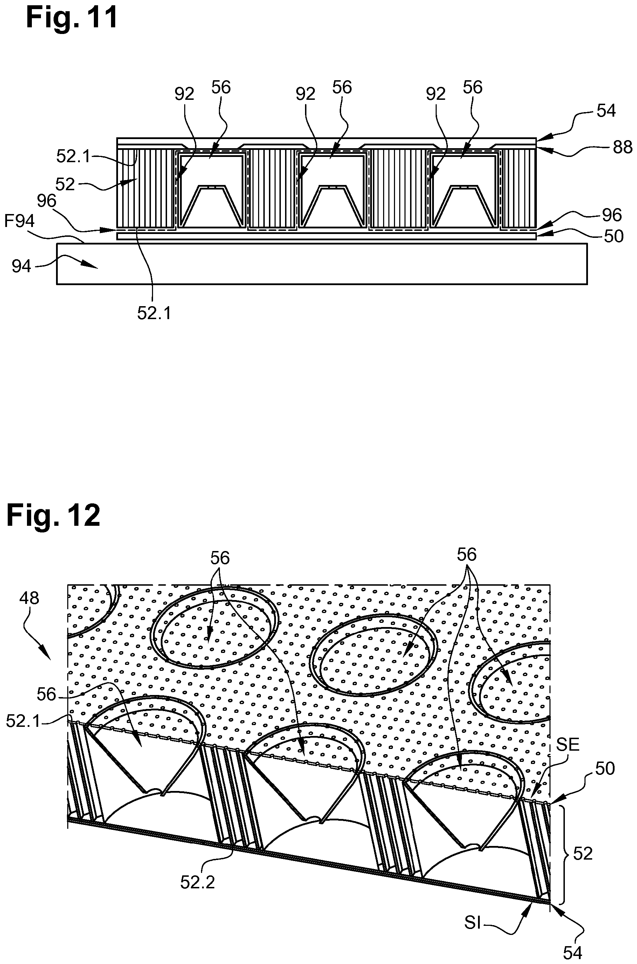

Selon un mode de réalisation visible sur la figure 12, la structure d'absorption acoustique 48 présente une surface extérieure SE en contact avec un milieu dans lequel se propagent, en fonctionnement, des ondes sonores et une surface intérieure SI opposée à la surface extérieure SE. La structure d'absorption acoustique 48 comprend, de la couche extérieure SE vers la couche intérieure SI, une couche poreuse 50 (également appelée couche résistive) dont une face forme la surface extérieure SE, au moins un panneau alvéolaire 52, une couche réflectrice 54 dont une face forme la surface intérieure SI et une pluralité d'éléments acoustiques 56 positionnés dans le panneau alvéolaire 52. Ainsi, la couche poreuse 50 est plaquée contre une première face 52.1 du panneau alvéolaire 52 et la couche réflectrice 54 est plaquée contre une deuxième face 52.2 du panneau alvéolaire 52, opposée à la première face 52.1

Selon un mode réalisation, le panneau alvéolaire 52 est une structure en nid d'abeilles.

Quel que soit le mode de réalisation, la structure d'absorption acoustique 30 comprend au moins un élément acoustique 56 positionné dans le panneau alvéolaire 52.

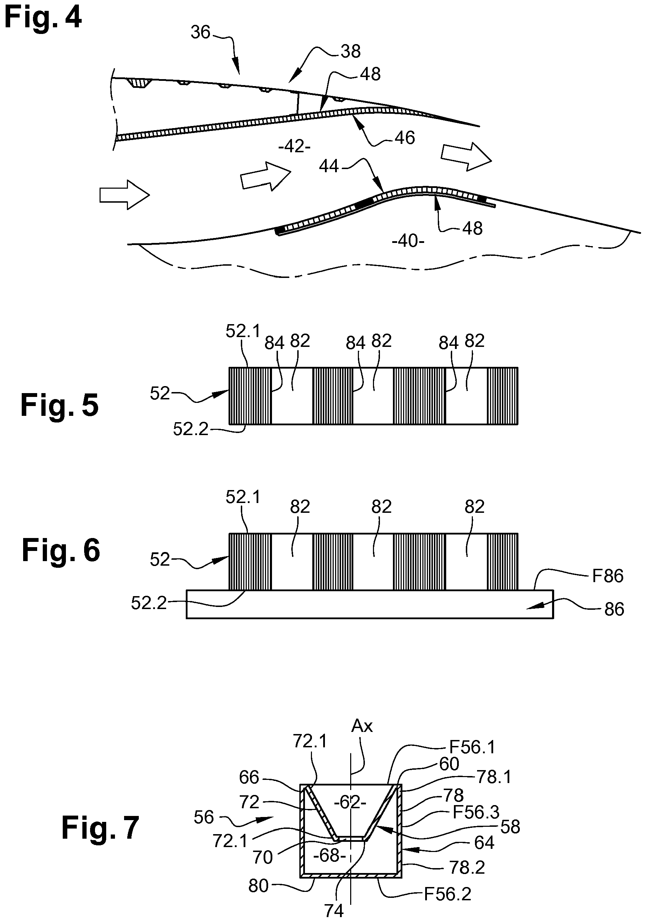

Selon un mode de réalisation visible sur la figure 7, un élément acoustique 56 comprend :
- une première enceinte 58, également appelée cône, qui présente une première embouchure 60 délimitée par un bord plaqué contre la couche poreuse 50 de sorte que la première enceinte 58 et la couche poreuse 50 délimitent une première cavité 62,
- une deuxième enceinte 64, également appelée capsule, dans laquelle est positionnée la première enceinte 58, au moins partiellement espacée de cette dernière, qui présente une deuxième embouchure 66 délimitée par un bord plaqué contre la première enceinte 58 (ou éventuellement la couche poreuse 50) de sorte que la deuxième enceinte 64 et la première enceinte 58 (et éventuellement la couche poreuse 50) délimitent une deuxième cavité 68,
- au moins un orifice acoustique 70 traversant la première enceinte 58 pour faire communiquer les première et deuxième cavités 62, 68.

Selon un agencement visible sur la figure 12, les éléments acoustiques 56 sont agencés selon plusieurs lignes et plusieurs colonnes. D'autres agencements pourraient être envisagés. Selon une première configuration visible sur la figure 7, la première enceinte 58 est tronconique et comprend :
- une première paroi latérale 72, délimitée par un premier bord 72.1 orienté vers la couche poreuse 50 et formant la première embouchure 60, ainsi que par un deuxième bord 72.2, opposé au premier bord 72.1, et
- une première paroi de fond 74 positionnée au niveau du deuxième bord 72.2 de la première paroi latérale 72 de sorte à fermer la première cavité 62,
- le (ou les) orifice(s) acoustique(s) 70 étant positionné(s) sur la première paroi latérale 72 et/ou sur la première paroi de fond 74.

La première enceinte 58 peut comprendre une collerette ou un épaulement au niveau du premier bord 72.1 pour venir en appui contre la couche poreuse 50.

Selon un mode de réalisation visible sur la figure 7, la deuxième enceinte 64 est tubulaire ou tronconique et comprend une deuxième paroi latérale 78, délimitée par un premier bord 78.1 orienté vers la couche poreuse 50 et formant la deuxième embouchure 66, et par un deuxième bord 78.2 opposé au premier bord 78.1, ainsi qu'une deuxième paroi de fond 80 positionnée au niveau du deuxième bord 78.2 de la deuxième paroi latérale 78 de sorte à fermer la deuxième cavité 68.

La deuxième 64 peut comprendre une collerette ou un épaulement au niveau du premier bord 78.1 pour venir en appui contre la collerette de la première enceinte et/ou contre la couche poreuse 50.

Selon une configuration visible sur la figure 7, la première enceinte 58 est centrée approximativement dans la deuxième enceinte 64 si bien que les première et deuxième parois latérales 72, 78 sont coaxiales et présentent un même axe de révolution Ax.

Bien entendu, l'invention n'est pas limitée aux agencements visibles sur la figure 7 pour les éléments acoustiques 56 et/ou à ces géométries et configurations pour les première et deuxième enceintes 58 et 64. Ainsi, les première et deuxième parois latérales 72, 78 de forme conique, tronconique ou cylindrique pourraient présenter des sections non circulaires. Quel que soit le mode de réalisation, chaque élément acoustique 56 comprend une première extrémité F56.1 (correspondant à la première embouchure 60 de la première enceinte 58) configurée pour être orientée vers la couche poreuse 50, une deuxième extrémité F56.2 (correspondant à la deuxième paroi de fond 80) configurée pour être orientée vers la couche réflectrice 54 et une face latérale F56.3 (correspondant à la surface extérieure de la deuxième enceinte 64) orientée vers le panneau alvéolaire 52. Selon une configuration, chaque élément acoustique 56 présente une hauteur (correspondant à la distance entre les première et deuxième extrémités F56.1, F56.2 de l'élément acoustique 56) approximativement égale à l'épaisseur du panneau alvéolaire 52 (correspondant à la distance entre les première et deuxième faces 52.1, 52.2 du panneau alvéolaire).

Les éléments acoustiques 56 sont réalisés par moulage ou par tout autre mode opératoire. Un procédé de fabrication de la structure d'absorption acoustique 48 comprend une première étape de réalisation d'un logement 82 pour chaque élément acoustique 56 dans un panneau alvéolaire 52 plan. Selon une particularité de l'invention, le logement 82 comprend une première extrémité débouchant au niveau de la première face 52.1 du panneau alvéolaire 52 et une deuxième extrémité débouchant au niveau de la deuxième face 52.2 du panneau alvéolaire 52. Ce logement 82 est délimité par une limite latérale 84 qui a une géométrie identique à celle de la face latérale F56.3 de l'élément acoustique 56.

Selon une configuration, lorsque la face latérale F56.3 de l'élément acoustique 56 est cylindrique, la limite latérale 84 est cylindrique et présente un diamètre approximativement égal au diamètre de la face latérale F56.3 de l'élément acoustique 56.

Lorsque la structure d'absorption acoustique 48 a une géométrie non plane, le procédé de fabrication de la structure d'absorption acoustique 48 comprend une deuxième étape de mise en forme du panneau alvéolaire 52 selon la géométrie souhaitée. A cet effet, le panneau alvéolaire 52 est conformé contre un premier outillage 86 qui comprend une surface de conformation F86 présentant une géométrie identique à la géométrie souhaitée pour la structure d'absorption acoustique 48, comme illustré sur la figure 6. Dans un but de simplification, la surface de conformation F86 a été représentée plane. En réalité, cette surface de conformation F86 est généralement courbe.

Les première et deuxième étapes pourraient être inversées. Cependant, le fait d'exécuter la première étape de réalisation avant la deuxième étape de mise en forme du panneau alvéolaire 52 permet de simplifier la première étape en réalisant l'usinage des logements dans un panneau alvéolaire plan.

Le procédé de fabrication de la structure d'absorption acoustique 48 comprend une troisième étape d'insertion des éléments acoustiques 56 dans leur logement 82, illustrée par

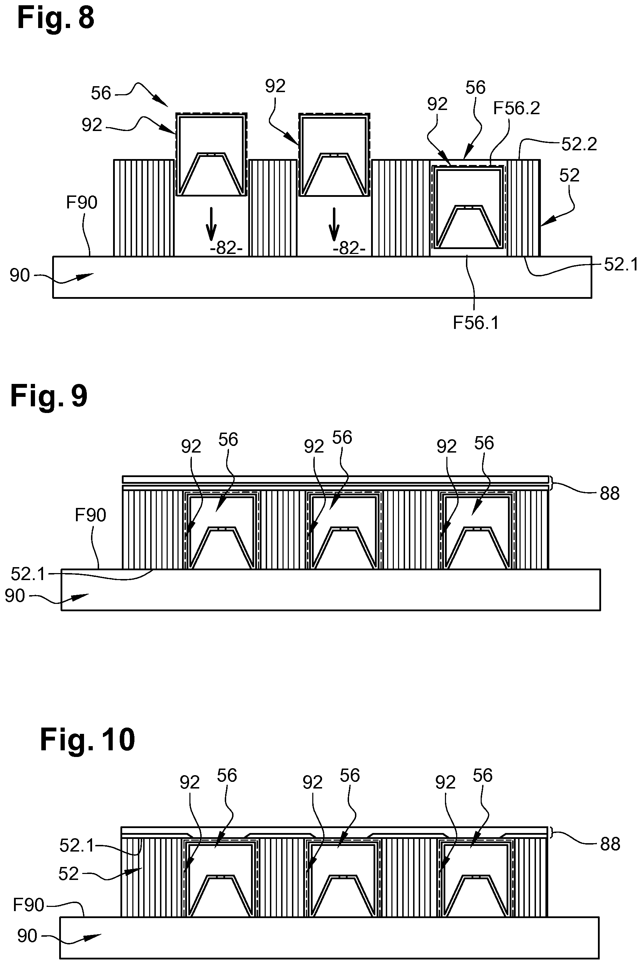

la figure 8, et une quatrième étape de dépose d'une couche d'ancrage 88 contre la deuxième face 52.2 du panneau alvéolaire 52, illustrée par la figure 9.

Lorsque la face latérale F56.3 de l'élément acoustique 56 est cylindrique, la première face 52.1 du panneau alvéolaire 52 (celle contre laquelle sera plaquée la couche poreuse 50) est plaquée contre une surface de dépose F90 d'un deuxième outillage 90. Cette surface de dépose F90 est conformée en fonction de la géométrie du panneau alvéolaire 52. En suivant, les éléments acoustiques 56 sont introduits dans leur logement 82 depuis la deuxième face 52.2 du panneau alvéolaire 52. Lorsque tous les éléments acoustiques 56 sont positionnés dans leur logement 82, la couche d'ancrage 88 est déposée sur la deuxième face 52.2 du panneau alvéolaire 52.

Lorsque la face latérale F56.3 de l'élément acoustique 56 n'est pas cylindrique mais tronconique par exemple, les éléments acoustiques 56 sont mis en place dans leur logement 82 depuis la première face 52.1 du panneau 52. Lorsque tous les éléments acoustiques 56 sont positionnés dans leur logement 82, la première face 52.1 du panneau alvéolaire 52 est plaquée contre la surface de dépose F92 du deuxième outillage 92, puis la couche d'ancrage 98 est déposée sur la deuxième face 52.2 du panneau alvéolaire 52.

Le fait de prévoir des éléments acoustiques 56 cylindriques permet de pouvoir les insérer dans leur logement 82 depuis la deuxième face 52.2 du panneau alvéolaire et de ne pas avoir besoin de le retourner, la première face 52.1 étant déjà plaquée contre la surface de dépose F90 du deuxième outillage 90.

Après la troisième étape d'insertion, lorsque les éléments acoustiques 56 ont une hauteur sensiblement égale à l'épaisseur du panneau alvéolaire 52, les première et deuxième extrémités F56.1, F56.2 de chaque élément acoustique 56 affleurent respectivement les première et deuxième faces 52.1, 52.2 du panneau acoustique 52. Lorsqu'un élément acoustique 56 a une hauteur inférieure à l'épaisseur du panneau alvéolaire 52, la première extrémité F56.1 de l'élément acoustique 56 affleure la première face 52.1 du panneau alvéolaire 52 et la deuxième extrémité F56.2 de l'élément acoustique 56 est décalée par rapport à la deuxième face 52.2 du panneau alvéolaire 52. Dans ce cas, l'espace entre la deuxième extrémité F56.2 de l'élément acoustique 56 et la deuxième face 52.2 du panneau alvéolaire 52 est comblé par tout moyen approprié, comme par exemple un film de colle. Selon un mode de réalisation, la couche d'ancrage 88 comprend au moins un tissu de fibres, comme par exemple des fibres de carbone, imprégnées d'une résine, comme par exemple une résine époxy. Cette couche d'ancrage 88 permet de limiter l'apparition d'un phénomène de « telegraphing » en surface de la structure d'absorption acoustique et/ou la migration de résine vers la couche poreuse 50 lors de la réalisation de la couche réflectrice 54.

Pour chaque élément acoustique 56, un système de liaison 92 est positionné entre l'élément acoustique 56 et le panneau alvéolaire 52 et/ou la couche d'ancrage 88.

Selon un mode de réalisation, le système de liaison 92 comprend au moins un film de colle intercalé entre d'une part l'élément acoustique 56 et d'autre part le panneau alvéolaire 52 et/ou la couche d'ancrage 88. Selon une configuration, au moins un film de colle est apposé sur au moins une partie de la face latérale F56.3 de chaque élément acoustique 56 préalablement à l'insertion des éléments acoustiques 56 dans leur logement 82. Selon un mode de réalisation, le film de colle du système de liaison 92 est un film de colle intumescent.

Selon une configuration, le système de liaison 92 est activable lors d'une étape de cuisson ou de polymérisation.

Le procédé de fabrication de la structure d'absorption acoustique 48 comprend une cinquième étape de cuisson ou de polymérisation pour assurer une liaison entre chaque élément acoustique 56 et le panneau alvéolaire 52 et/ou la couche d'ancrage 98, visible sur

la figure 10. Lors de cette cinquième étape, la première face 52.1 du panneau alvéolaire 52 est plaquée contre une surface, notamment la surface de dépose F90 du deuxième outillage 90, et le panneau alvéolaire 52 est recouvert d'un habillage de cuisson ou de polymérisation. La cinquième étape de cuisson ou de polymérisation est réalisée à une température de cuisson ou polymérisation, de l'ordre de 180 °C, et à une première pression comprise entre 0,5 et 1 bar.

Lors de cette cinquième étape, un faible affaissement peut apparaître au niveau de la couche d'ancrage 88, au droit de chaque logement 82. Cependant, ce défaut peut être atténué ou corrigé lors de la réalisation de la couche réflectrice 54.

Cette cinquième étape permet d'obtenir une liaison entre la couche d'ancrage 88 et le panneau alvéolaire 52 ainsi qu'entre chaque élément acoustique 56 et le panneau alvéolaire 52 et/ou la couche d'ancrage 88.

Selon un mode opératoire, la polymérisation peut être partielle et suffisante pour immobiliser les éléments acoustiques 56 par rapport au panneau alvéolaire 52 et/ou à la couche d'ancrage 88.

Le procédé de fabrication de la structure d'absorption acoustique 48 comprend une sixième étape de mise en place de la couche poreuse 50 et de la couche réflectrice 54 et une septième étape de cuisson ou polymérisation de la structure d'absorption acoustique afin d'obtenir une cohésion entre la couche poreuse 50 et le panneau alvéolaire 52 ainsi qu'entre la couche réflectrice 54 et le panneau alvéolaire 52.

Lors de cette sixième étape, la couche poreuse 50 est déposée sur une surface de dépose F94 d'un troisième outillage 94, puis le panneau alvéolaire 52 équipé des éléments acoustiques 56 et de la couche d'ancrage 88 est posé sur la couche poreuse 50 et, enfin, la couche réflectrice 54 est déposée sur la couche d'ancrage 88.

Lors de la septième étape de cuisson ou polymérisation, la structure d'absorption acoustique est soumise à une température de cuisson ou polymérisation de l'ordre de 180 °C, et à une deuxième pression de l'ordre de 2 bars.

Selon un mode opératoire, lorsque la couche d'ancrage 88 est totalement polymérisée, un film de colle est intercalé entre la couche d'ancrage 88 et la couche réflectrice 54 lors de la sixième étape.

Selon un mode opératoire, la couche poreuse 50 est préalablement polymérisée avant d'être déposée sur le troisième outillage 94 pour être solidarisée au panneau alvéolaire 52. Un film de colle 96 est intercalé entre la couche poreuse 50 et le panneau alvéolaire 52 lors de la sixième étape avant la septième étape de cuisson ou polymérisation. Selon ce mode opératoire, le film de colle 96 est configuré pour ne pas recouvrir les éléments acoustiques 56 si bien qu'à l'issue de l'étape de cuisson ou de polymérisation, les éléments acoustiques 56 ne sont pas collés à la couche poreuse 50 limitant ainsi les phénomènes de marquage de ladite couche poreuse 50.

Selon un mode de réalisation, la couche poreuse 50 est une plaque perforée. Si l'étape de perforation est réalisée avant la mise en place du film de colle intercalé entre la couche poreuse 50 et le panneau alvéolaire 52, ce film de colle est déposé uniquement sur le panneau alvéolaire 52 par réticulation. Si l'étape de perforation est réalisée après la mise en place du film de colle, ce dernier peut être mis sur toute la surface de la couche poreuse 50. Quel que soit le mode opératoire le procédé de fabrication de la structure d'absorption acoustique comprend une première étape de cuisson ou polymérisation à une première pression permettant de relier chaque élément acoustique 56 au panneau alvéolaire 52 et/ou à la couche d'ancrage 88 et une deuxième étape de cuisson ou polymérisation à une deuxième pression permettant de relier la couche poreuse 50 et la couche réflectrice 54 au panneau alvéolaire 52. Selon une autre caractéristique, la deuxième pression est supérieure à la première pression de manière à obtenir une excellente cohésion entre la couche poreuse 50, le panneau alvéolaire 52 et la couche réflectrice 54 tout en limitant les phénomènes de « telegraphing » lors de la première étape de cuisson ou polymérisation.

Le fait de relier les éléments acoustiques 56 au panneau alvéolaire 52 permet de pouvoir manipuler ledit panneau alvéolaire 52 sans risque de sortie des éléments acoustiques 56 de leur logement 82.

## Revendications

1. Procédé de fabrication d'une structure d'absorption acoustique comprenant un panneau alvéolaire (52), une couche poreuse (50) positionnée au niveau d'une première face (52.1) du panneau alvéolaire (52), une couche réflectrice (54) positionnée au niveau d'une deuxième face (52.2) du panneau alvéolaire (52) et une pluralité d'éléments acoustiques (56) positionnés dans le panneau alvéolaire (52), chaque élément acoustique (56) comprenant une première enceinte (58) qui présente une première embouchure (60) fermée par la couche poreuse (50) de manière à former une première cavité (62), une deuxième enceinte (64) dans laquelle est positionnée la première enceinte (58), fermée de manière à former une deuxième cavité (68), et au moins un orifice acoustique (70) traversant la première enceinte (58), le procédé comprenant les étapes :
- de réalisation, pour chaque élément acoustique (56), d'un logement (82) dans le panneau alvéolaire (52) qui débouche au niveau des première et deuxième faces (52.1, 52.2) du panneau alvéolaire (52),
- d'insertion des éléments acoustiques (56) dans leur logement (82),
- de mise en place de la couche poreuse(50) et de la couche réflectrice (54),
et étant **caractérisé en ce qu'**il comprend les étapes :
- de dépose d'une couche d'ancrage (88) sur la deuxième face (52.2) du panneau alvéolaire (52),
- de cuisson ou polymérisation à une première pression permettant de relier chaque élément acoustique (56) au panneau alvéolaire (52) et/ou à la couche d'ancrage (88), et
- de cuisson ou polymérisation à une deuxième pression permettant de relier la couche poreuse (50) et la couche réflectrice (54) au panneau alvéolaire (52).

2. Procédé de fabrication d'une structure d'absorption acoustique selon la revendication 1, **caractérisé en ce que** la première pression est inférieure à la deuxième pression.

3. Procédé de fabrication d'une structure d'absorption acoustique selon la revendication précédente, **caractérisé en ce que** la première pression est comprise entre 0,5 et 1 bar et/ou la deuxième pression est de l'ordre de 2 bars.

4. Procédé de fabrication d'une structure d'absorption acoustique selon l'une des revendications précédentes, **caractérisé en ce que** chaque élément acoustique (56) présente une paroi latérale (F56.3) cylindrique et **en ce que** la première face (52.1) du panneau alvéolaire (52) est plaquée contre une surface d'un outillage (90) lors de l'étape d'insertion des éléments acoustiques (56) jusqu'à la première étape de cuisson ou polymérisation, les éléments acoustiques (56) étant introduits dans leur logement (82) depuis la deuxième face (52.2) du panneau alvéolaire (52).

5. Procédé de fabrication d'une structure d'absorption acoustique selon l'une des revendications précédentes, **caractérisé en ce que**, pour chaque élément acoustique (56), un système de liaison (92), activable lors de la première étape de cuisson ou polymérisation, est positionné entre l'élément acoustique (56) et le panneau alvéolaire (52) et/ou la couche d'ancrage (88).

6. Procédé de fabrication d'une structure d'absorption acoustique selon la revendication précédente, **caractérisé en ce que** le système de liaison (92) comprend au moins un film de colle intumescent apposé sur au moins une partie d'une face latérale (F56.3) de chaque élément acoustique (56) préalablement à l'insertion des éléments acoustiques (56) dans leur logement (82).

7. Procédé de fabrication d'une structure d'absorption acoustique selon l'une des revendications précédentes, **caractérisé en ce que** la couche poreuse (50) est préalablement polymérisée avant d'être solidarisée au panneau alvéolaire (52) et **en ce qu'**un film de colle (96) est intercalé entre la couche poreuse (50) et le panneau alvéolaire (52) avant la deuxième étape de cuisson ou polymérisation.

8. Procédé de fabrication d'une structure d'absorption acoustique selon la revendication précédente, **caractérisé en ce que** le film de colle (96) est configuré pour ne pas recouvrir les éléments acoustiques (56).

9. Structure d'absorption acoustique obtenue à partir du procédé de fabrication selon l'une des revendications précédentes, ladite structure d'absorption acoustique comprenant un panneau alvéolaire (52), une couche poreuse (50) positionnée au niveau d'une première face (52.1) du panneau alvéolaire (52), une couche réflectrice (54) positionnée au niveau d'une deuxième face (52.2) du panneau alvéolaire (52) et une pluralité d'éléments acoustiques (56) positionnés dans le panneau alvéolaire (52), chaque élément acoustique (56) comprenant une première enceinte (58) qui présente une première embouchure (60) fermée par la couche poreuse (50) de manière à former une première cavité (62), une deuxième enceinte (64) dans laquelle est positionnée la première enceinte (58), fermée de manière à former une deuxième cavité (68), et au moins un orifice acoustique (70) traversant la première enceinte (58), le panneau alvéolaire (52) comprenant, pour chaque élément acoustique (56), un logement (82) qui débouche au niveau des première et deuxième faces (52.1, 52.2) du panneau alvéolaire (52), **caractérisé en ce que** la structure d'absorption acoustique comprend une couche d'ancrage (88) intercalée entre la deuxième face (52.2) du panneau alvéolaire (52) et la couche réflectrice (54).

10. Structure d'absorption acoustique selon la revendication précédente, **caractérisée en ce que** les éléments acoustiques (56) présentent une hauteur sensiblement égale à l'épaisseur du panneau alvéolaire (52).

11. Structure d'absorption acoustique selon la revendication 9 ou 10, **caractérisée en ce qu'**elle comprend un film de colle intumescent intercalé entre d'une part l'élément acoustique (56) et d'autre part le panneau alvéolaire (52) et/ou la couche d'ancrage (88).

12. Ensemble propulsif d'aéronef comprenant au moins une structure d'absorption acoustique selon la revendication précédente.

## Patentansprüche

1. Verfahren zur Herstellung einer schallabsorbierenden Struktur mit einer Wabenplatte (52), einer porösen Schicht (50), die an einer ersten Seite (52.1) der Wabenplatte (52) angeordnet ist, einer reflektierenden Schicht (54), die an einer zweiten Seite (52.2) der Wabenplatte (52) angeordnet ist, und eine Vielzahl von Akustikelementen (56), die in der Wabenplatte (52) angeordnet sind, wobei jedes Akustikelement (56) ein erstes Gehäuse (58) umfasst, das eine erste Mündung (60) aufweist, die durch die poröse Schicht (50) verschlossen ist, um einen ersten Hohlraum (62) zu bilden, ein zweites Gehäuse (64), in dem das erste Gehäuse (58) angeordnet ist und das so geschlossen ist, dass es einen zweiten Hohlraum (68) bildet, und wenigstens eine akustische Öffnung (70), die sich durch das erste Gehäuse (58) erstreckt, wobei das Verfahren die folgenden Schritte umfasst:
- Herstellen einer Aufnahme (82) für jedes Akustikelement (56) in der Wabenplatte (52), die an der ersten und zweiten Seite (52.1, 52.2) der Wabenplatte (52) mündet,
- Einsetzen der Akustikelemente (56) in ihre Aufnahme (82),
- Anbringen der porösen Schicht (50) und der reflektierenden Schicht (54),
und **dadurch gekennzeichnet, dass** es die folgenden Schritte umfasst:
- Aufbringen einer Verankerungsschicht (88) auf die zweite Seite (52.2) der Wabenplatte (52),
- Wärmebehandeln oder Polymerisieren bei einem ersten Druck, der es ermöglicht, jedes akustische Element (56) mit der Wabenplatte (52) und/oder der Verankerungsschicht (88) zu verbinden, und
- Wärmebehandeln oder Polymerisieren bei einem zweiten Druck, der es ermöglicht, die poröse Schicht (50) und die reflektierende Schicht (54) mit der Wabenplatte (52) zu verbinden.

2. Verfahren zur Herstellung einer schallabsorbierenden Struktur nach Anspruch 1, **dadurch gekennzeichnet, dass** der erste Druck niedriger als der zweite Druck ist.

3. Verfahren zur Herstellung einer schallabsorbierenden Struktur nach dem vorhergehenden Anspruch, **dadurch gekennzeichnet, dass** der erste Druck zwischen 0,5 und 1 bar liegt und/oder der zweite Druck in der Größenordnung von 2 bar liegt.

4. Verfahren zur Herstellung einer schallabsorbierenden Struktur nach einem der vorhergehenden Ansprüche, **dadurch gekennzeichnet, dass** jedes Akustikelement (56) eine zylindrische Seitenwand (F56.3) aufweist und dass die erste Seite (52.1) der Wabenplatte (52) während des Schritts des Einsetzens der Akustikelemente (56) bis zum ersten Wärmebehandlungs- oder Polymerisationsschritt gegen eine Oberfläche eines Werkzeugs (90) angesetzt wird, wobei die Akustikelemente (56) von der zweiten Seite (52.2) der Wabenplatte (52) in ihre Aufnahme (82) eingesetzt werden.

5. Verfahren zur Herstellung einer schallabsorbierenden Struktur nach einem der vorhergehenden Ansprüche, **dadurch gekennzeichnet, dass** für jedes Akustikelement (56) ein Verbindungssystem (92), das während des ersten Wärmebehandlungs- oder Polymerisationsschritts aktiviert werden kann, zwischen dem Akustikelement (56) und der Wabenplatte (52) und/oder der Verankerungsschicht (88) angeordnet wird.

6. Verfahren zur Herstellung einer schallabsorbierenden Struktur nach dem vorhergehenden Anspruch, **dadurch gekennzeichnet, dass** das Verbindungssystem (92) wenigstens einen aufquellenden Klebstofffilm umfasst, der auf wenigstens auf einen Teil einer Seitenfläche (F56.3) jedes Akustikelements (56) vor dem Einsetzen der Akustikelemente (56) in ihre Aufnahme (82) aufgebracht wird.

7. Verfahren zur Herstellung einer schallabsorbierenden Struktur nach einem der vorhergehenden Ansprüche, **dadurch gekennzeichnet, dass** die poröse Schicht (50) vorab polymerisiert wird, bevor sie mit der Wabenplatte (52) fest verbunden wird, und dass ein Klebstofffilm (96) zwischen der porösen Schicht (50) und der Wabenplatte (52) vor dem zweiten Schritt der Wärmebehandlung oder Polymerisierung eingefügt wird.

8. Verfahren zur Herstellung einer schallabsorbierenden Struktur nach dem vorhergehenden Anspruch, **dadurch gekennzeichnet, dass** der Klebstofffilm (96) so gestaltet ist, dass er die Akustikelemente (56) nicht bedeckt.

9. Schallabsorbierende Struktur, hergestellt mit dem Herstellungsverfahren nach einem der vorhergehenden Ansprüche, wobei die schallabsorbierende Struktur eine Wabenplatte (52), eine poröse Schicht (50), die an einer ersten Seite (52.1) der Wabenplatte (52) angeordnet ist, eine reflektierende Schicht (54), die an einer zweiten Seite (52.2) der Wabenplatte (52) und eine Vielzahl von Akustikelementen (56) aufweist, die in der Wabenplatte (52) angeordnet sind, wobei jedes Akustikelement (56) ein erstes Gehäuse (58) umfasst, das eine erste Mündung (60) aufweist, die durch die poröse Schicht (50) verschlossen ist, um einen ersten Hohlraum (62) zu bilden, ein zweites Gehäuse (64), in dem das erste Gehäuse (58) angeordnet ist und das so geschlossen ist, dass es einen zweiten Hohlraum (68) bildet, und wenigstens eine akustische Öffnung (70), die sich durch das erste Gehäuse (58) erstreckt, wobei die Wabenplatte (52) für jedes akustische Element (56) eine Aufnahme (82) umfasst, die an der ersten und zweiten Seite (52.1, 52.2) der Wabenplatte (52) mündet, **dadurch gekennzeichnet, dass** die schallabsorbierende Struktur eine Verankerungsschicht (88) umfasst, die zwischen der zweiten Seite (52.2) der Wabenplatte (52) und der reflektierenden Schicht (54) eingefügt ist.

10. Schallabsorbierende Struktur nach dem vorhergehenden Anspruch, **dadurch gekennzeichnet, dass** die Akustikelemente (56) eine Höhe aufweisen, die im Wesentlichen gleich der Dicke der Wabenplatte (52) ist.

11. Schallabsorbierende Struktur nach Anspruch 9 oder 10, **dadurch gekennzeichnet, dass** diese einen aufquellenden Klebstofffilm umfasst, der zwischen einerseits dem Akustikelement (56) und andererseits der Wabenplatte (52) und/oder der Verankerungsschicht (88) eingefügt ist.

12. Flugzeugantriebsaggregat mit wenigstens einer schallabsorbierenden Struktur nach dem vorhergehenden Anspruch.

## Claims

1. Method for manufacturing a sound absorption structure comprising a cellular panel (52), a porous layer (50) positioned on a first face (52.1) of the cellular panel (52), a reflective layer (54) positioned on a second face (52.2) of the cellular panel (52) and a plurality of acoustic elements (56) positioned in the cellular panel (52), each acoustic element (56) comprising a first chamber (58) that has a first mouth (60) closed by the porous layer (50) so that it forms a first cavity (62), a second chamber (64) in which the first chamber (58) is positioned, closed so that it forms a second cavity (68), and at least one acoustic orifice (70) passing through the first chamber (58), the method comprising the steps of:
- producing, for each acoustic element (56), a recess (82) in the cellular panel (52) that opens out onto the first and second faces (52.1, 52.2) of the cellular panel (52),
- inserting the acoustic elements (56) into their recesses (82),
- putting in place the porous layer (50) and the reflective layer (54),
and being **characterized in that** it comprises the steps of:
- laying an anchoring layer (88) on the second face (52.2) of the cellular panel (52),
- curing or polymerization at a first pressure making it possible to connect each acoustic element (56) to the cellular panel (52) and/or to the anchoring layer (88),
- curing or polymerization at a second pressure making it possible to connect the porous layer (50) and the reflective layer (54) to the cellular panel (52).

2. Method for manufacturing a sound absorption structure as claimed in claim 1, **characterized in that** the first pressure is lower than the second pressure.

3. Method for manufacturing a sound absorption structure as claimed in the previous claim, **characterized in that** the first pressure is between 0.5 and 1 bar and/or the second pressure is of the order of 2 bar.

4. Method for manufacturing a sound absorption structure as claimed in one of the previous claims, **characterized in that** each acoustic element (56) has a cylindrical side wall (F56.3), and **in that** the first face (52.1) of the cellular panel (52) is pressed against a surface of a fixture (90) during the step of inserting the acoustic elements (56) up to the first curing or polymerization step, the acoustic elements (56) being inserted into their recesses (82) from the second face (52.2) of the cellular panel (52).

5. Method for manufacturing a sound absorption structure as claimed in one of the previous claims, **characterized in that**, for each acoustic element (56), a connecting system (92), which can be activated during the first curing or polymerization step, is positioned between the acoustic element (56) and the cellular panel (52) and/or the anchoring layer (88).

6. Method for manufacturing a sound absorption structure as claimed in the previous claim, **characterized in that** the connecting system (92) comprises at least one intumescent adhesive film applied on at least one portion of a side face (F56.3) of each acoustic element (56) prior to the insertion of the acoustic elements (56) into their recesses (82).

7. Method for manufacturing a sound absorption structure as claimed in one of the previous claims, **characterized in that** the porous layer (50) is polymerized in advance before being rigidly connected to the cellular panel (52) and **in that** an adhesive film (96) is inserted between the porous layer (50) and the cellular panel (52) before the second curing or polymerization step.

8. Method for manufacturing a sound absorption structure as claimed in the previous claim, **characterized in that** the adhesive film (96) is configured so that it does not cover the acoustic elements (56).

9. Sound absorption structure obtained using the manufacturing method as claimed in one of the previous claims, said sound absorption structure comprising a cellular panel (52), a porous layer (50) positioned on a first face (52.1) of the cellular panel (52), a reflective layer (54) positioned on a second face (52.2) of the cellular panel (52) and a plurality of acoustic elements (56) positioned in the cellular panel (52), each acoustic element (56) comprising a first chamber (58) that has a first mouth (60) closed by the porous layer (50) so that it forms a first cavity (62), a second chamber (64) in which the first chamber (58) is positioned, closed so that it forms a second cavity (68), and at least one acoustic orifice (70) passing through the first chamber (58), the cellular panel (52) comprising, for each acoustic element (56), a recess (82) that opens out onto the first and second faces (52.1, 52.2) of the cellular panel (52), **characterized in that** the sound absorption structure comprises an anchoring layer (88) inserted between the second face (52.2) of the cellular panel (52) and the reflective layer (54).

10. The sound absorption structure as claimed in the previous claim, **characterized in that** the acoustic elements (56) have a height that is substantially equal to the thickness of the cellular panel (52).

11. The sound absorption structure as claimed in claim 9 or 10, **characterized in that** it comprises an intumescent adhesive film inserted between the acoustic element (56) and the cellular panel (52) and/or the anchoring layer (88).

12. An aircraft powerplant comprising at least one sound absorption structure as claimed in the previous claim.
